# EUROPEAN PATENT SPECIFICATION

(11) **EP 2 596 935 B1**
(45) Date of publication and mention of the grant of the patent: **04.03.2015**
(21) Application number: 11190275.5
(22) Date of filing: 23.11.2011
(51) Int. Cl.: B29C 33/38, B29C 33/30, B29L 31/08

(54) **Plug and method for manufacturing a plug**
Stempel und Verfahren zur Herstellung eines Stempels
Poinçon et procédé de fabrication d'un poinçon

(43) Date of publication of application: 29.05.2013
(73) Proprietor: Siemens Aktiengesellschaft, 80333 München (DE)
(72) Inventor: Mikkelsen, Jacob, 9200 Aalborg SV (DK); Peterslund, Esther, 8471 Sabro (DK)

(56) References cited:
- WO-A1-2006/048652
- GB-A- 2 268 699
- JP-A- 10 328 782

## Description

The present invention relates to a plug with a predetermined shape for forming a mould, whereby the plug comprises a flexible skin and multiple actuators, wherein the skin covers the multiple actuators which can be adjusted in order to generate the predetermined shape.

Rotor blades for wind turbines are built in moulds which are built on plugs. In order to manufacture moulds for blade production one plug is needed for each blade type. A plug consists of two parts, one for the pressure side of the blade and one for the suction side. The manufacturing of plugs is time consuming, costly and requires special equipment. Plugs are commonly manufactured at a production site of a sub-supplier and the transportation of large plugs is costly. Further transportation is complicated since restrictions on time of the day when the transportation can take place exist. During transportation the large plugs are exposed to damage risks. Manufacturing of a plug for a new blade geometry can only start when the aerodynamic geometry of a new blade is frozen. Therefore the process of defining the aerodynamic design, manufacturing a plug, manufacturing a mould and producing rotor blades in the mould is lengthy. Another disadvantage is that the storage of plugs requires a considerable space since a common plug has a surface area of 800 m².

Usually one dedicated plug is used to build a mould for one specific blade type. A typical plug construction consists of a rigid back structure which can be made from foam or ply wood, which is cut into a geometry close to the blade geometry. On top of this structure a paste is applied and cured. The hardened paste is then milled to a final geometry. Tolerances are tight and the milling equipment needed to handle large blades is expensive and huge. Normally plugs are manufactured in sections due to their size. As moulds are typically built in a dedicated "mould factory" and then shipped to different blade factories transport is costly, time consuming and the moulds are exposed to the risk of transportation damage. Transportation of the plug to the mould manufacturing unit requires special transportation. When the plugs arrive at the mould factory the sections are set together to form the two plug parts, lined up, checked for damage, repaired and a release agent or a wax is applied so the mould can be de-moulded from the plug. Another drawback of the production of common moulds is that a new mould has a typical delivery time of several months.

In GB-A-2268699 a plug with a predetermined shape for forming a mould is disclosed comprising a resiliently deformable material defining a layup surface, supported by a series of spaced jacks which are adjustable in height. Such an apparatus can be used for forming a fibre reinforced plastics laminate. However, the spaced jacks are only adjustable in one direction, namely vertically.

It is therefore an object of the present invention to provide a plug with an improved adjustability.

According to the present invention this object is achieved in the above defined plug in thatan actuator is formed as an articulated arm with two or more movable articulated segments.

The present invention is based on the idea to use one plug for the manufacture of several different moulds for rotor blades. Instead of a conventional rigid plug a plug with a flexible skin is proposed with actuators which are adjusted in order to generate a specific shape. This enables one plug to be used for several, different rotor blade geometries so that the total costs for the plugs are reduced.

The actuators of the inventive plug may be arranged in matrix with rows and columns. Each actuator may be adjusted in a vertical and/or horizontal direction influencing the flexible skin. Accordingly the flexible skin is supported by multiple actuators so that the predetermined shape is realised.

According to the invention an actuator may be formed as an articulated arm with two or more movable articulated sections. The articulated arm can be adjusted in a vertical direction as well as laterally to a certain extent.

According to the present invention the actuator may be provided with a shaped end section contacting the flexible skin. The shaped end may be a sphere or a part of a sphere so that the contact area between the end section of the articulated arm and the flexible skin is enlarged and edges are avoided.

Preferably the flexible skin may be an open structure, in particular a mesh or a grid. A foil, in particular a vacuum foil, can be applied upon the mesh or grid, therefore it is not necessary that the flexible skin is air tight.

According to a preferred embodiment of the inventive plug it may be envisaged that a controller is provided for controlling the actuators. Data for adjusting the actuators can be stored in a memory in order to obtain a predetermined shape of the flexible skin. By using the controller the flexible skin can be brought into different shapes for different rotor blades. When the production of a mould with a specific shape is completed the controller may adjust the actuators so that a different shape of the flexible skin is generated for the manufacture of a mould with a different geometry. Design modifications can be realised easily by simply adjusting the respective actuators so that a mould or a mould part with a different geometry can be build. Accordingly design changes can be realised fast.

The inventive plug may comprise a means for heating the mould, in particular an electric heating or a hot-air heater or a water heating. The means for heating helps controlling the curing process of the mould. Moulds are made using curable resins and the hardening time depends on the resin temperature. When a heating is used a mould can be cured fully or to green strength. For curing the resin UV radiation or IR radiation may be used as well. Electric heating may be incorporated in the mould skin, e. g. by a metallic grid or a copper mesh using electric current.

Further features of the inventive method are disclosed in the dependent claims.

The invention and its underlying principle will be better understood when consideration is given to the following detailed description of a preferred embodiment.

In the accompanying drawings
- fig. 1: is a cross sectional view of an inventive plug;
- fig. 2: is a plane view of the plug shown in fig. 1;
- fig. 3: shows a method for manufacturing a plug according to the invention; and
- fig. 4: shows a mould being cured on an inventive plug.

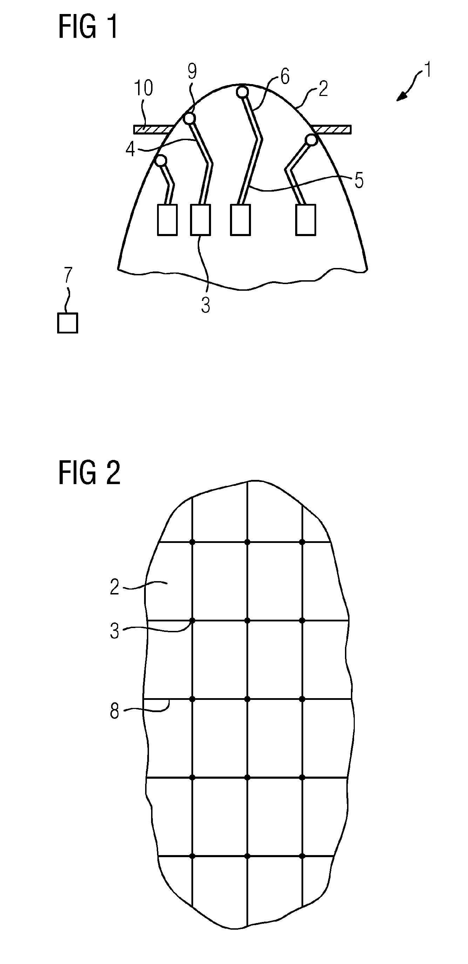

In fig. 1 a cross section of a plug 1 is shown. The plug is used for manufacturing a mould for rotor blades. The plug 1 comprises a flexible skin 2 covering multiple actuators 3. The actuators 3 replace a rigid back structure in conventional plugs. Each actuator 3 comprises an articulate arm 4 consisting of segments 5, 6. In other embodiments an arm may consist of more than two segments, e.g. three or four segments. All actuators 3 are connected to a controller 7. The controller 7 is used for adjusting the articulate arms 4, which can be moved in order to generate a predetermined shape of the flexible skin 2. The actuators 3 are hydraulic actuators, in other embodiments electric actuators can be used.

Fig. 2 is a top view of the flexible plug shown in fig. 1. One can see that multiple actuators 3 are arranged in a matrix with rows and columns. In the embodiment of fig. 2 the flexible skin 2 is formed as a mesh 8 which is supported by end sections 9 of the actuators 3.

Specific shapes of the contour of a rotor blade are stored in a memory in the controller 7. The controller 7 controls the actuators 3 so that each actuator 3 is moved and adjusted to a specific position so that a predetermined shape of the mesh 8 and the flexible skin 2 is generated. In this state a flange 10 is added on the sides of the flexible skin 2 as can be seen in fig. 1.

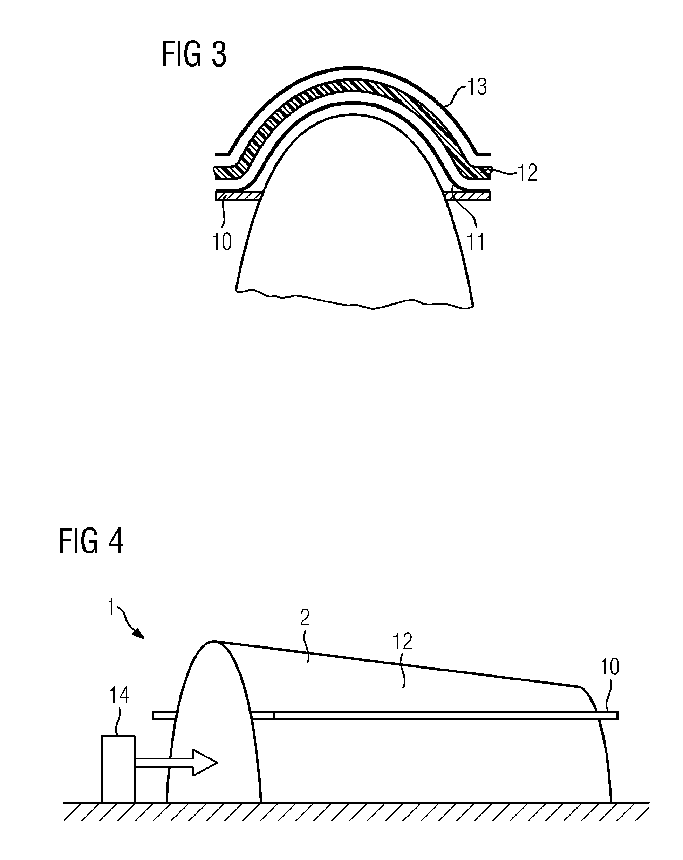

Fig. 3 shows the manufacture of the plug 1. The flexible skin 3 is provided with a lateral flange 10. On top of the flexible skin 2 and the flange 10 a vacuum foil 11 is applied. A mould laminate 12 is placed on the vacuum foil 11. Due to the vacuum foil 11 it is not necessary that the mesh 8 is air tight. The mould laminate 12 consists of glass fibre reinforced plastics or carbon fibre reinforced plastics. The mould laminate 12 is covered by another vacuum foil 13. Subsequently the mould laminate 12 is cured so that a mould is produced. In this embodiment the mould laminate 12 is cured to green strength on the flexible skin 2 of the plug 1.

Subsequently - as shown in fig. 4 - the flexible skin 2 of plug 1 is used to seal edges around the plug and hot air from a heater 14 is used to fully cure the mould laminate 12 so that a mould for the manufacture of rotor blades is created.

In the root of the blade a heater 14 is set up and hot air is blown into the back structure of the plug 1. In other embodiments a heating means can be built in the flexible skin, e.g. an electric heating.

The plug 1 shown in fig. 1 to 4 can be used for different mould sizes and both for suction and pressure side, accordingly fewer plug parts are necessary compared to conventional technology. The need for a new plug for a new blade type is eliminated, a new geometry does not require a new plug, instead the current plug is simply loaded with a new CAD file and the actuators are automatically adjusted accordingly. Minor updates of aerodynamic profiles for a blade can be implemented fast by simply uploading a new CAD file for the new shape. The need for mould transportation is reduced or even eliminated as one single plug part can be installed at a blade factory thus eliminating the problems and the risks linked with a long distance transportation. Further the need for plug storage is eliminated. Another advantage is that the aerodynamic design can be frozen much later in a project without effecting the time to market for the new blade design. The manufacture of a mould is possible without a special milling machine being necessary.

## Claims

1. A plug (1) with a predetermined shape for forming a mould, whereby the plug (1) comprises a flexible skin (2) and multiple actuators (3), wherein the skin (2) covers the multiple actuators (3) which can be adjusted in order to generate the predetermined shape, **characterised in that** an actuator (3) is formed as an articulated arm with two or more movable articulated segments (5, 6).

2. A plug according to claim 1, **characterised in that** the actuators (3) are arranged in a matrix with rows and columns.

3. A plug according to claim 1 or 2, **characterised in that** an actuator (3) is provided with a shaped end section contacting the flexible skin (2).

4. A plug according to any of the preceding claims, **characterised in that** the flexible skin (2) is an open structure, in particular a mesh (8) or a grid.

5. A plug according to any of the preceding claims, **characterised in that** a controller (7) is provided for controlling the actuators (3) and data for adjusting the actuators (3) is stored in a memory in order to obtain a predetermined shape of the flexible skin (2).

6. A plug according to any of the preceding claims, **characterised in that** it comprises a means for heating the mould, in particular an electric heating or a hot-air heater (14) or a water heating.

## Patentansprüche

1. Stempel (1) mit einer vorbestimmten Gestalt zum Ausbilden einer Form, wobei der Stempel (1) eine flexible Hülle (2) und mehrere Aktuatoren (3) umfasst, wobei die Hülle (2) die mehreren Aktuatoren (3) bedeckt, welche eingestellt werden können, um die vorbestimmte Gestalt zu erzeugen, **dadurch gekennzeichnet, dass** ein Aktuator (3) als ein Gelenkarm mit zwei oder mehr beweglichen gelenkigen Segmenten (5, 6) ausgebildet ist.

2. Stempel nach Anspruch 1, **dadurch gekennzeichnet, dass** die Aktuatoren (3) in einer Matrix mit Zeilen und Spalten angeordnet sind.

3. Stempel nach Anspruch 1 oder 2, **dadurch gekennzeichnet, dass** ein Aktuator (3) mit einem geformten Endabschnitt versehen ist, der sich mit der flexiblen Hülle (2) in Kontakt befindet.

4. Stempel nach einem der vorhergehenden Ansprüche, **dadurch gekennzeichnet, dass** die flexible Hülle (2) eine offene Struktur ist, insbesondere ein Netz (8) oder ein Gitter.

5. Stempel nach einem der vorhergehenden Ansprüche, **dadurch gekennzeichnet, dass** eine Steuereinheit (7) zum Steuern der Aktuatoren (3) vorgesehen ist und Daten zum Einstellen der Aktuatoren (3) in einem Speicher gespeichert sind, um eine vorbestimmte Gestalt der flexiblen Hülle (2) zu erhalten.

6. Stempel nach einem der vorhergehenden Ansprüche, **dadurch gekennzeichnet, dass** er ein Mittel zum Erwärmen der Form umfasst, insbesondere eine elektrische Heizung oder eine Heißluftheizvorrichtung (14) oder eine Wasserheizung.

## Revendications

1. Poinçon (1) ayant une forme prédéterminée pour former un moule, où le poinçon (1) comprend une peau flexible (2) et de multiples actionneurs (3), poinçon dans lequel la peau (2) recouvre les multiples actionneurs (3) qui peuvent être réglés afin de générer la forme prédéterminée, **caractérisé en ce qu'**un actionneur (3) est formé comme un bras articulé ayant deux segments (5, 6), ou plus, articulés mobiles.

2. Poinçon selon la revendication 1, **caractérisé en ce que** les actionneurs (3) sont agencés dans une matrice comprenant des rangées et des colonnes.

3. Poinçon selon la revendication 1 ou 2, **caractérisé en ce qu'**un actionneur (3) est doté d'une section d'extrémité façonnée venant au contact de la peau flexible (2).

4. Poinçon selon l'une quelconque des revendications précédentes, **caractérisé en ce que** la peau flexible (2) est une structure ouverte, en particulier un maillage (8) ou une grille.

5. Poinçon selon l'une quelconque des revendications précédentes, **caractérisé en ce qu'**un contrôleur (7) est prévu pour contrôler les actionneurs (3), et des données pour régler les actionneurs (3) sont stockées dans une mémoire, afin d'obtenir une forme prédéterminée de la peau flexible (2).

6. Poinçon selon l'une quelconque des revendications précédentes, **caractérisé en ce qu'**il comprend des moyens pour chauffer le moule, en particulier un chauffage électrique ou un appareil de chauffage à air chaud (14) ou un chauffage à eau.
